# EUROPEAN PATENT SPECIFICATION

(11) **EP 2 172 679 B1**
(45) Date of publication and mention of the grant of the patent: **20.06.2018**
(21) Application number: 08790774.7
(22) Date of filing: 01.07.2008
(51) Int. Cl.: F16J 15/34, F16J 15/40

(54) **MECHANICAL SEAL DEVICE**
MECHANISCHE ABDICHTUNGSVORRICHTUNG
DISPOSITIF DE JOINT MECANIQUE

(30) Priority: 06.07.2007 JP 2007178931
(43) Date of publication of application: 07.04.2010
(73) Proprietor: Eagle Industry Co., Ltd., Minato-ku Tokyo 105-8587 (JP)
(72) Inventor: TAKAHASHI, Hidekazu, Tokyo 105-8587 (JP)
(74) Representative: Isarpatent
(86) International application number: PCT/JP2008/061911
(87) International publication number: WO 2009/008289

(56) References cited:
- EP-A1- 1 637 782
- DE-U1-202004 012 488
- GB-A- 2 371 335
- JP-A- S5 519 948
- JP-A- 09 089 119
- JP-A- 2002 098 237
- JP-A- 2002 139 157
- JP-A- 2002 147 618

## Description

### Technical Field

The present invention relates to a mechanical seal device which is a tandem type double seal device having two sliding faces, which is small type, and which can perform cooling of the seal device efficiently.

### Background Art

Conventionally, as a mechanical seal device of this kind, a mechanical seal device disclosed in Japanese Patent Laid Open No. 2003-074712 (Patent Document 1) by the present applicant has been known.

Patent Document 1: Japanese Patent Laid Open No. 2003-074712

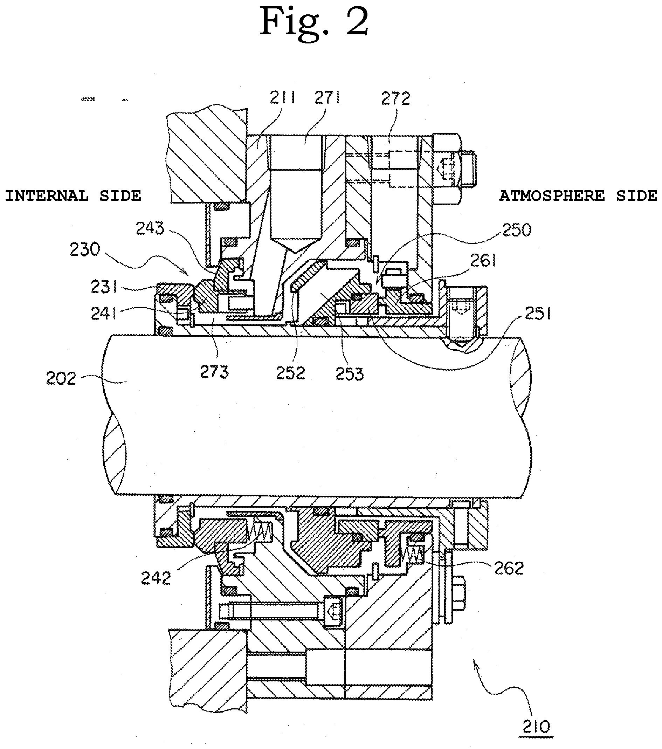

Fig. 2 is a drawing to show a structure of a conventional mechanical seal device 210.

The mechanical seal device 210 comprises an internal side mechanical seal device 230 and an external side (atmosphere side) mechanical seal device 250.

The internal side mechanical seal device 230 comprises a rotary ring 231 which is arranged at an internal side, and a stationary ring 241 which is arranged at an external side. The internal side mechanical seal device 230 is so called a static type seal device wherein a sealed sliding face is formed by pressing the stationary ring 241 towards the rotary ring 231 direction by a spring 242. Note that, the stationary ring 241 is equipped to a seal case 211 via a packing 243.

The external side mechanical seal device 250 comprises a rotary ring 251 which is arranged at the internal side and a stationary ring 261 which is arranged at the external side. The external side mechanical seal device 250 is a static type seal device wherein a sealed sliding face is formed by pressing the stationary ring 261 towards the rotary ring 251 direction by a spring 262.

As mentioned above, the mechanical seal device 210 is a tandem type double seal device.

In the mechanical seal device 210, an intermediate chamber 273 is formed between the internal side mechanical seal device 230 and the external side mechanical seal device 250, a supplying bore 271 and an outlet bore 272 for a quenching liquid (cooling fluid) are formed as communicating with the intermediate chamber 273.

In the intermediate chamber 273, a pumping bore 253 angled towards a radial direction is formed on a back face of a case 252 which receives the rotary ring 251 of the external side mechanical seal device 250. Thereby, when the case 252 rotates with a rotary shaft 202, the fluid (quenching liquid) in the intermediate chamber 273 is flown along the pumping bore 253. As a result, a flow passage of the quenching liquid, in which the quenching liquid is supplied from the supplying bore 271 and discharged from the outlet bore 272 through the intermediate chamber 273, is formed, so that the internal side mechanical seal device 230, the external side mechanical seal device 250, and the sliding faces thereof are cooled.

Further examples of conventional mechanical seal devices are disclosed in the following documents:
Document GB 2 371 335 A discloses a mechanical seal device wherein lubricating oil is prevented from being dissipated from an inside center part in the direction of a peripheral wall of an oil chamber in a submerged pump. Air is prevented from being mixed into the lubricating oil by an oil film forming action toward an oil flowout port regardless of a variation in the number of rotations of a pump shaft, whereby effective lubricating and cooling actions of the shaft sealing device can be performed.
Document EP 1 637 782 A1 discloses a mechanical seal device comprising a seal housing having a first housing portion and a second housing portion and wherein the first housing portion is radially mounted in sealing relationship with the second housing portion; the second housing portion is axially mounted to extend substantially along the length of the mechanical seal apparatus, and the first or second housing portion is operatively mounted in sealing relationship with a respective first stationary component. If the first housing portion is operatively mounted in sealing relationship with the first stationary component, then the second housing portion may be operatively mounted in sealing relationship with a respective second stationary component. Likewise, if the second housing portion is operatively mounted in sealing relationship with the first stationary component, then the first housing portion is operatively mounted in sealing relationship with a respective second stationary component.
Document EP 1 637 782 A1 discloses a mechanical seal apparatus comprising a seal housing having a first housing portion and a second housing portion and wherein the first housing portion is radially mounted in sealing relationship with the second housing portion; the second housing portion is axially mounted to extend substantially along the length of the mechanical seal apparatus, and the first or second housing portion is operatively mounted in sealing relationship with a respective first stationary component. If the first housing portion is operatively mounted in sealing relationship with the first stationary component, then the second housing portion may be operatively mounted in sealing relationship with a respective second stationary component. Likewise, if the second housing portion is operatively mounted in sealing relationship with the first stationary component, then the first housing portion is operatively mounted in sealing relationship with a respective second stationary component.

### Disclosure of Invention

### Problems to Be Solved by the Invention

In the conventional mechanical seal device 210 as shown in Fig. 2, the external side (atmosphere side) mechanical seal device 250 is a static type mechanical seal device, the pumping bore 253 is provided to the case 252 of the rotary ring 251.

However, in this structure, it is necessary to make the pumping bore 253 not to communicate with a mating ring (rotary ring 251) which is located at the external side (atmosphere side), because the mating ring (rotary ring 251) of the external side mechanical seal device 250 is equipped internally to the case 252. Accordingly, a sufficient length is necessary for the case 252 in an axial direction of the rotary shaft 202, and the case 252 becomes thick in the axial direction. As a result, the whole of the mechanical seal device 210 becomes thick, and then it is not preferable.

Also, in the above mentioned conventional mechanical seal device 210, an external surface of the rotary ring (mating ring) 251 does not contact with the quenching liquid to cause a problem that efficient cooling thereof cannot be performed, because it is internally equipped to the case 252.

Further, in the conventional mechanical seal device 210, since there is a section wherein metal is exposed at an internal side liquid contact position, there is a problem that the section wear outs by solid content and rigid bead.

Also, because a set plate so as to constitute a cartridge type is provided to atmosphere side, there is a problem as being longer as equal to the length of the set plate.

The present invention has been made by considering such problems, a purpose of the invention is to provide a mechanical seal device which is available to cool efficiently, having high abrasion resistance and small size.

### Means for Solving the Problems

In order to solve the problems, a mechanical seal device according to the present invention is that a mechanical seal device provided between a rotary shaft and a housing to seal object fluid, comprises first seal device provided to a position closer to a space wherein the object fluid is supplied, a second seal device provided to a position away from the space, an intermediate chamber formed between the first seal device and the second seal device, and a pumping ring to perform pumping effect so as to make an intermediate chamber fluid supplied to the intermediate chamber flowing in the intermediate chamber wherein the second seal device is a rotary type seal device wherein a rotary ring of the second seal device is provided to the first seal device than a stationary ring of the second seal device, the rotary ring is pressed to the stationary ring, the pumping ring comprises a back face section extending to a radial direction near the second seal device in the intermediate chamber, a cylindrical section formed from an outer circumferential of the back face section to a direction of the second seal device so as to receive the rotary ring, a suction port which is an opening formed at the back face section so as to introduce the intermediate chamber fluid into the cylindrical section, and discharge ports which are a plurality of openings formed on a circumferential face of the cylindrical section so as to discharge the intermediate chamber fluid in the cylindrical section to an external portion of the cylindrical section by rotation of the pumping ring.

According to the mechanical seal device of the present invention having such constitution, for example, an intermediate chamber fluid such as cooling fluid and the like is introduced to an inner section of the cylindrical section from a back face section of the pumping ring through an opening of the back face section and to form a fluid passage at a gap between an inner circumferential face of the cylindrical portion and an outer circumferential face of the rotary ring, then, the fluid is discharged from an opening which is formed on a circumferential face of the cylindrical section. At this time, the pumping ring is a structure having a back face section and a cylindrical section substantially, a passage which is angled to an axial direction is not necessary as conventionally. Therefore, a thickness of the section can be thinner and an axial direction thickness of the whole mechanical seal device can be thinner too, thus the mechanical seal device can be made smaller.

Also, the intermediate chamber fluid equally flows on a surface of the rotary ring, and it flows at vicinity of a seal tip end face of the external side mechanical seal (second seal device). Therefore, cooling performance for the sealing apparatus can be made effectively.

Preferably, the mechanical seal device according to the present invention further comprises a supplying bore configurated to supply the intermediate chamber fluid to the intermediate chamber, and an outlet bore configurated to discharge the intermediate chamber fluid from the intermediate chamber, wherein the pumping ring performs the pumping effect so that the intermediate chamber fluid supplied from the supplying bore is discharged from the discharge bore through the intermediate chamber.

According to the mechanical seal device of the present invention having such constitution, the intermediate chamber fluid, for example as a cooling medium, supplied from the supplying bore can be discharged from the outlet bore appropriately through an intermediate chamber between the first seal device and the second seal device. Therefore, cooling of the whole seal apparatus can be made more efficiently.

Also preferably, the mechanical seal device according to the present invention is characterized that the intermediate chamber fluid is cooling fluid.

According to the mechanical seal device having such constitution, the cooling of the whole sealing device can be performed efficiently, because the cooling fluid is supplied as an intermediate chamber fluid.

Also preferably, the mechanical seal device according to the present invention is characterized that a groove which is used for mounting a set plate to equip the mechanical seal device as a cartridge type is also used as an O-ring groove for mounting other components to the rotary shaft after mounting the mechanical seal apparatus.

According to the mechanical seal device of the present invention having such constitution, because an annular ring for the set plate is also used as a groove for the O-ring, a longitudinal length of the mechanical seal device can be shortened and the mechanical seal device can be smaller.

Also preferably, the mechanical seal device according to the present invention is characterized that a rotary ring of the first seal device is provided at a side of the space where the object fluid is located, a back face of the rotary ring is placed in consistent with a side face of the groove, which is close to the first seal device.

According to the mechanical seal device of the present invention having such constitution, it is available appropriately to perform equipping a cartridge type mechanical seal device using a set plate, to perform an operation as a seal device after the equipment by utilizing the double used annular ring respectively. Thus, the mechanical seal device having small size and high efficiency can be provided.

### Brief Description of Drawings

[Fig. 1] Fig. 1 shows a constitution of one embodiment of a mechanical seal device of the present invention.
[Fig. 2] Fig. 2 shows a constitution of a conventional mechanical seal device.

### Best Mode for Carrying Out the Invention

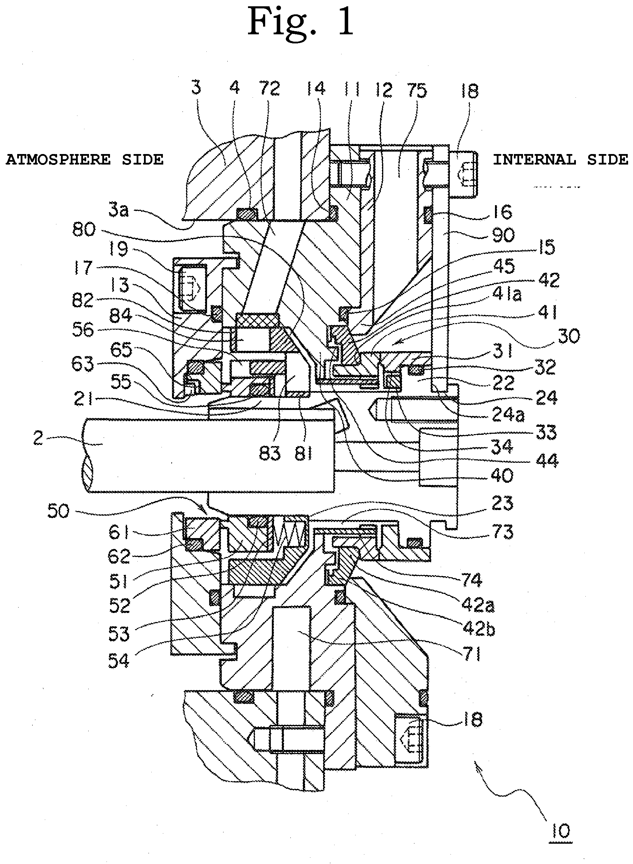

With respect to one embodiment of the present invention, it will be specified with reference to Fig. 1.

Fig. 1 is shows a constitution of the mechanical seal device 10 which is a cross sectional view that a plain face extending through an axial center of a shaft (rotary shaft) 2. Note that, in Fig. 1, a right side is an internal side and a left side is an atmosphere side.

The mechanical seal device 10 is a cartridge type seal device which is equipped from the internal side to a shaft bore section 3a of a housing 3 to which a shaft 2 penetrates.

As shown in Fig. 1, as a main constitution, the mechanical seal device comprises a first seal case 11, a second seal case 12, a seal cover 13, a sleeve 21, an internal side mechanical seal device 30, an external side mechanical seal device 50 and a collar 80 as a pumping ring according to the present invention.

The first seal case 11, the second seal case 12 and the seal cover 13 are about annular members to constitute a housing of the mechanical seal device 10, and the shaft 2 extends through an opening formed at an inner circumferential section thereof. Also, the internal side mechanical seal device 30 and the external side mechanical seal device 50 are provided to the inner circumferential section thereof.

The first seal case 11 is equipped to a shaft bore section 3a of the housing 3 via O-rings 4 and 14 between the housing 3, also the second seal case 12 is equipped to the shaft bore section 3a of the housing via an O-ring 15 by a hex head bolt 18 with this sequence.

Also, the seal cover 13 is equipped with a tip end section of the atmosphere side of the first seal case 11 by a hex head bolt 19 so as to cover the tip end via an O-ring 17 between the first seal case 11.

Also, following mentioned at least one cooling fluid supplying bore 71 and one cooling fluid outlet bore 72 are provided to the first seal case 11, respectively.

Also, a slurry supplying bore 75 for supplying slurry to the internal side space is provided on the second seal case 12.

A convex section 40 which is projected to an inner side of a radial direction is formed at a center of an axial direction of the first seal case 11. A stationary ring 41 of the internal side mechanical seal device 30 is provided to the convex section 40 via a packing 42. Also, a stationary ring 61 of the external side mechanical seal device 50 is provided to the seal cover 13.

Note that, the first seal case 11, the second seal case 12 and the seal cover 13 are preferably constituted by non-metallic material having high abrasion resistance such as ceramics and the like. In particular, according to forming the second seal case 12 by the material, it is available to reduce or prevent abrasion of a liquid contact section of the mechanical seal device 10 which is preferable, even in case that solid or rigid content exists in the object fluid.

The sleeve 21 is externally provided to the shaft 2. A rotary ring 31 of the internal side mechanical seal device 30 and a rotary ring 51 of the external side mechanical seal device 50 are provided to the sleeve 21, respectively. A convex section 22 which projects toward an outer radius direction is formed near a tip end of the internal side of the sleeve 21. A rotary ring 31 of the internal side mechanical seal device 30 is provided to the convex section 22.

Also, a gap 23 is formed at a center of the sleeve 21 for locking the collar 80.

The internal side mechanical seal device 30 and the external side mechanical seal device 50 are provided to the axial circumferential space which is between the sleeve 21 equipped to the shaft2, inner circumferential faces of the first seal case 11, the second seal case 12 and the seal cover 13.

The internal side mechanical seal device 30 comprises the rotary shaft provided neat the tip end of the internal side of the sleeve 21 and rotates integrally with the shaft 2, and a stationary ring 41 provided to an internal side of the convex section 40 of the inner circumference of the first seal case.

The rotary ring 31 is fit with a concave section 22 of the sleeve 21 via an O-ring 32 wherein an end face facing to atmosphere side thereof and facing to the stationary ring 41 is formed as a sliding face.

In the rotary ring 31, a gap is formed at an inner circumferential side, the gap is fit to an angled section of atmosphere side of the convex section 22 so as to make sealing tightly.

A plurality of knock pins 33 equally spaced are formed on a side face of the convex section 22 of the sleeve 21 so as to project a shaft direction atmosphere side, also a plurality of fitting grooves 34 equally spaced are formed on the rotary ring 31 at the circumferential direction so as to correspond to the knock pins 33. By locking the pins 33 to the fitting grooves 34 of the rotary ring 33, a relative rotation of the rotary ring 31 to the sleeve 21 is prevented and is kept to the sleeve 21. In other words, the rotary ring 31 is equipped to the sleeve 21 (shaft 2) so as to rotate integrally with.

The rotary ring 31 is constituted of material such as silicon carbide, carbon, ceramics and the like.

The stationary ring 41 is provided to the convex section 40 of the first seal case 11 via a packing 42, an end face of an internal side thereof is formed as a sliding face which is facing to the rotary ring 31.

At a side face of the tip end (most inner circumferential section) of the convex section 40 of the first seal case, nock pins not shown are formed to a circumferential direction as equally spaced so as to project to the shaft direction internal side. Also, at a back face of the stationary ring 41, a plurality of fitting grooves not shown are formed as equally spaced to the circumferential direction so as to correspond tp the knock pins. By looking the knock pins to the fitting grooves of the stationary ring 41, the stationary ring is kept to the first seal case 11 so as not to rotate.

Also, a plurality of spring seats not shown are provided on a back face of the stationary ring 41 which are equally spaced to the circumferential direction, and each springs not shown are seated to the respective spring seats to compress the stationary ring 41 to the rotary ring 31 direction as snapping.

Also, an outer circumferential face of the stationary ring 41 is formed at a gap section 41 which contacts tightly with the packing 42.

The stationary ring 41 is constituted of material such as silicon carbide, carbon, ceramics and the like.

The packing 42 is an annular shape member made of rubber 42. In the packing 42, a latch section 42b is provided on an outer circumferential thereof and an inner circumference is formed as a seal rip section 42a. The latch section 42a is fit to a concave section 44 formed at a root section of the convex section 40 of the first seal case 11. The latch section 42b of the packing 42 is pressed to the shaft direction by an atmosphere side tip end of the second seal case 12. Thereby, the packing 42 is kept in the concave section 44 and is protected that a pressure of the object fluid does not act to the packing 42 directly.

The seal rip section 42a of the packing 42 tightly fits to a gap section 41a which is formed at the outer circumferential face of the securing ring 41, and is snapping the stationary ring 41 to the rotary ring 31 direction by an elastic force of the seal rip section 42a.

The packing 42 is constituted of material such as perfluoro elastomer, fluororubber, nitrile rubber, EPDM, elastomer polyester and the like.

In the internal side mechanical seal device 30 having such constitution, the stationary ring 41 is pressed to the internal side, namely pressed to the rotary ring 31 direction by a spring pressure force not shown and an elastic force of the seal rip section 42a of the packing 42. As a result, the sliding face of the rotary ring 31 and the sliding face of the stationary ring 41, which are facing each other, tightly contacts by a predetermined pressure. Then, the rotary ring 31 rotates and moves by rotating the shaft 2, the respective tightly contact faces of the rotary ring 31 and the stationary ring 41 slide each other.

The external side mechanical seal 50 comprises a rotary ring 51 which is provided at a tip end of atmosphere side of the sleeve 21 and a stationary ring 61 provided on the seal cover 13.

The rotary ring 51 is externally provided to the sleeve 21 via an O-ring 52 as movably towards the shaft direction, and an end face of atmosphere side of the rotary ring which is facing to the stationary ring 61 is formed as a sliding face. A compression ring 53 is equipped at an internal side tip end of the rotary ring 51, the compression ring 53 is provided to the collar 80 as movably towards the axial direction by that a drive pin 55 connects to a fitting groove 56. Thereby, the rotary ring 51 rotates integrally with the sleeve 21 (shaft 2). Also, a plurality of coil springs 54 are provided the compression ring 53 and the collar 80 to a circumferential direction between, thereby the rotary ring 51 is pressed to atmosphere side (external side) direction.

The rotary ring 61 is slidingly located to the inner circumferential section of the seal cover 13, an end face of the internal side which is facing to the rotary ring 51 is formed as a sliding face.

The stationary ring 61 is fit to a concave section which is formed on the inner circumferential section of the seal cover 13 via an O-ring 62.

A plurality of knock pins 63 which project to the axial direction internal side is formed toward a circumferential direction, and a plurality of fitting groove 65 is provided to the circumferential direction so as to correspond to the knock pins 63. By locking the knock pins 63 to the fitting groove 65 of the stationary ring 61, the stationary ring 61 is supported to the seal cover 13 so as not to rotate.

In the external side mechanical seal device 50 having such constitution, the rotary ring 51 is pressed to the external side, namely to the stationary ring 61 side direction by compression force which acts to the compression ring 53. As a result, a sliding face of the rotary ring 51 and a sliding face of the stationary ring 61 which are facing each other, tightly contact with each other by a predetermined pressure. Then, the rotary ring 51 only rotates by rotating the shaft 2, each tightly contact faces of the rotary ring 51 and the stationary ring 61 slide each other.

Note that, in the mechanical seal device 10 of such embodiment, the external side mechanical seal device 50 is a rotary type mechanical seal wherein a spring (coil spring 54) rotates with the shaft 2. As a result, the collar 80, to which the rotary ring 51 is provided, does not contact with atmosphere side. Thereby, the pumping ring can be constituted by the collar 80 as following mentioned characteristic configuration.

In the first seal case 11, two to three equally spaced cooling fluid (quenching liquid) supplying bores 71 and outlet bores 72 are provided along an outer circumferential face.

The cooling fluid supplying bore 71 is connected with a piping which is provided in the housing 3 at the outer circumferential face of the first seal case 11, and is a fluid passage which penetrates near the internal side mechanical seal device 30 so as to supply the cooling fluid to the rotary ring 41 and to a back face of the packing 42 of the internal side mechanical seal device 30.

Also, the cooling fluid outlet bore 72 is connected with a piping which is provided in the housing 3 at the outer circumferential face of the first seal case 11, and is a fluid passage which penetrates near the external side mechanical seal device 50 so as to discharge the cooling fluid from near the rotary ring 61 of the external side mechanical seal device 50.

Also, a flow pass 73 of cooling fluid (intermediate liquid) is formed at inner circumferential sides of the first seal case 11 and the second seal case 12, more precisely, in a space between inner circumferential faces of the seal cases 11 and 12 which reaches from an inner diameter sliding face side of the internal side mechanical seal device 30 to an outer diameter sliding face side of the external side mechanical seal device 50 and an outer circumferential face of the sleeve 21. Namely, a flow pass is formed from the cooling fluid supplying bore 71 to the cooling fluid outlet bore 72 via near the internal side mechanical seal device 30 and near the external side mechanical seal device 50.

Also, a fluid guide ring 74 is provided near an opening of cooling fluid supplying bore 71 which is inside of the flow pass 73 between the first seal case 11 and the sleeve 21 so as to shut off a part of flow of the supplied cooling fluid. The fluid guide ring 74 is fastened to the first seal case 11 by a locking screw and the like. A guide face is formed on the fluid guide ring 74 so as to guide the quenching fluid to the inner diameter side of the sliding face of the internal side mechanical seal device 30 or the external side mechanical seal device 50 direction efficiently.

In such intermediate chamber (fluid passage 73) of mechanical seal device 10, the intermediate chamber section formed on an outer circumference of the external side mechanical seal device 50 is also formed as sufficiently wide and a radial direction height thereof is high too, as shown in drawings. Then, the pumping ring 80 according to the present invention which is a collar 80 to which the rotary ring 51 of the external side mechanical seal device 50 is arranged to this chamber.

The collar 80 is that, as shown in drawings, a peripheral edge section of a back face section 81 which projects as an annular ring shape to which a coil spring 54 is provided is extended towards the external side so as to cause a cylindrical shape, and the collar 80 is a member having a shape to receive the rotary ring 51 of the external side mechanical seal device 50.

Then, a plurality of ports 83 as suction openings of fluid is formed at the back face section 81 so that the intermediate liquid (cooling fluid), which is flown through the intermediate chamber from the internal side mechanical seal device 30, flows to an inside of a cylindrical proton 82 of the collar as it is along an axial direction of the shaft 2.

Also, the collar 80 and the first seal case 11 are formed so that a space between the back face section 81 of the collar 80 and the inner circumferential face of the first seal case 11 located at an outer side of the collar, becomes very narrow space. Note that, in the mechanical seal device 10 according to the present embodiment, the back face section 81 of the collar 80 is formed so as to be an angled face which is angled to the external side as being the radius direction outer side, the inner circumferential face of the first seal case 11 is also formed as similar angled face so that the inner circumferential face is facing thereto with an extremely narrow space.

Also, a large number of discharge ports 84, which communicate through the inner circumferential side and the outer circumferential side, are formed on a circumferential face of a cylindrical section 82 of the collar. When the collar 30 rotates with the shaft 2, fluid which exists in the inner circumferential faces of the rotary ring 51 and the cylindrical section 82 of the collar 80, moves towards the circumferential direction with the rotary ring 51 or the collar 80. By providing the large number of the openings at the cylindrical section, the fluid, to which a centrifugal force acts by moving towards the circumferential side, is discharged to an outer portion of the collar 80 from the discharging port 84 provided on the cylindrical section 82. Although a circumferential face of the first seal case 11 closes to an outer circumference of the collar 80, the fluid discharged to the outside from the cylindrical section 80 is guided to the opening and is discharged to the outside form the outlet bore 72, since a plurality of the cooling fluid outlet bore 72 is provided along the circumferential face thereof.

Also, according to this, a flow passage is formed at an inside of the collar 80, to which the fluid is introduced from the intermediate camber of the external side mechanical seal 30 through a suction opening formed at a back face of the collar 80.

By rotating the collar 80 with the shaft 2, the fluid of the intermediate chamber is introduced to the inside of the collar 80 from the suction port 83 of the back face of the collar 80, and the fluid is supplied to a space between an outer circumferential face of the rotary ring 51 of the external side mechanical seal device 50 and the inner circumferential face of the collar 80. As a result, the fluid passage of the intermediate liquid is formed at the outer circumferential face of the rotary ring 51. As the cooling fluid equally flows on an external surface of the rotary ring 51 and flows near the seal sliding face of the external side mechanical seal device 50, a sealing face of the external side mechanical seal device 50 can be cooled effectively. Then, the fluid introduced to the collar 80 is discharged to the cooling fluid outlet bore 72 from the discharge ports 84 on the circumferential face of the cylindrical section 82.

As mentioned above, in the mechanical seal device 10 of the present embodiment, the external side mechanical seal device 50 is a rotary type mechanical seal device wherein the spring (coil spring 54) rotates with the shaft 2, as a result, whole body of the collar 80, to which the rotary ring 51 is provided, is arranged within the intermediate chamber without contacting atmosphere side. Thus, it is no longer necessary to isolate the space at both sides of the circumferential face of the collar 80, it is available to constitute like that an opening is provided to the collar 80. According to the constitution, the collar 80 can be performed as a pumping ring.

In this constitution, a thickness of an axial direction can be thinner and whole body of the mechanical seal device 10 can be thinner too extremely, because a flow pass for cooling fluid can be formed at a space between an inner circumference of the collar 80 and an outer circumference of the rotary ring 51.

Also, in the mechanical seal device 10, an annular groove 24 for a set plate is provided to an internal side tip end of the sleeve 21. The annular groove 24 is formed so that an axial direction of a side face 24a of external side becomes same position with a position of a back face of the rotary ring 31 of the internal side mechanical seal device 30.

By equipping a set plate 90 shown by a chain double-dashed line in a drawing to the annular groove 24, the mechanical seal device 10 can be constituted as a cartridge type seal device.

Also, the annular groove 24 is used for equipping other components, for example a propeller agitation and the like, by equipping an O-ring after setting the mechanical seal device 10 to an apparatus.

At this time, for example, providing a propeller agitation made of ceramics so as to cover a liquid contact section of the internal side of the mechanical seal device 10 by the component such as the propeller agitation and the like, it is available to constitute that the liquid contact section does not expose a metal. As a result, even if solid contents and rigid content and rigid content exist in the object fluid, it is possible to prevent abrasion of the internal side liquid contact section of the mechanical seal device 10.

In this manner, the groove 24 to which the set plate is equipped and the groove for the O-ring are as used as double purpose, a longitudinal length of the mechanical seal device 10 can be shortened and the mechanical seal device 10 can be small sized.

In this manner, according to the mechanical seal device 10 of the present embodiment, the external side mechanical seal device 50 is constituted as a rotary type so as to prevent contact of the collar 80 with atmosphere, the collar 80 to perform pumping effect can be realized by providing large number of openings to the circumferential face (cylindrical section 82) and a bottom face (back face section 81) of the collar 80. In the collar 80 as a pumping ring, a flow passage for the intermediate liquid which is cooling fluid can be formed in a space between the inner circumferential face of the collar 80 and the outer circumferential face of the rotary ring 51 of the external side mechanical seal device 50. Also, the cooling fluid flows equally to the outer circumferential face of the stationary ring 41 and flows near the seal sliding face of the external side mechanical seal device 50 similarly.

Therefore, it is available to provide a mechanical seal device which is available to perform cooling seal faces and respective seal rings efficiently.

Also, with respect to the groove 24 provided to the internal side tip end of the sleeve 21, it is constituted to use an annular groove to equip the set plate, also to use as a groove for an O-ring to equip a propeller agitation and the like. As a result, it is possible to make short an axial direction thickness as compared from a conventional device wherein an annular groove is provided individually, the small sized mechanical seal device 10 having further thinner thickness can be realized.

Also, equipped components such as the propeller agitation and the like are made by zirconia or SiC, thereby the tip end of the sleeve 21 can be coated, it is possible to increase anti abrasion property extremely.

Further, it is available to extremely improve anti-abrasion property by composing ceramics of the second seal case 12 provided to the external side.

Note that, the above mentioned embodiment is described for easily understanding of the present invention which does not limit the present invention at all. Respective elements disclosed in the present embodiment include whole design around and equivalents are included in the technical scope of the present invention as defined by the claims.

### Industrial Applicability

The mechanical seal device of the present invention is a high performance mechanical seal device which is small sized, having excellent heat resistance and anti-abrasion properties, and is available to apply as a shaft seal device to seal arbitral object fluids in arbitral fields and an arbitral type of business. In particular, the present invention is very effective if applying as a shaft seal device for an apparatus used in a business field such as treating powder business, semi-conductor business, business relating to mine and civil engineering for treating fluid in which solid content and rigid beads are included possibly.

## Claims

1. A mechanical seal apparatus (10) arranged such that in use to be provided between a rotary shaft (2) and a housing (3) to seal an object fluid comprising
a first mechanical seal (30) provided to a position closer to a space where said object fluid is located,
a second mechanical seal (50) provided to a position away from said space, and
an intermediate chamber (73) formed between said first mechanical seal (30) and said second mechanical seal (50), wherein said mechanical apparatus (10) further comprises a pumping ring (80) to perform pumping effect so as to make an intermediate chamber fluid supplied to said intermediate chamber (73) flowing in the intermediate chamber (73),
said first mechanical seal (30) comprises a rotary ring (31) whose end face facing said position away from said space and a stationary ring (41) is formed as a sliding face, said second mechanical seal (50) comprises a rotary ring (51) whose end face facing said position away from said space and a stationary ring (61) is formed as a sliding face, **characterized in that** said pumping ring(80) is arranged such that in use rotates with said rotary shaft (2) and comprises a back face section (81) extending to a radial direction near said second mechanical seal (50) in said intermediate chamber (73),
a cylindrical section (82) formed from an outer circumferential of said back face section (81) to a direction of said second mechanical seal (50) so as to receive therein the said rotary ring (51) of said second mechanical seal (50), a suction port (83) formed as an opening at said back face section (81) so as to introduce said intermediate chamber fluid into said cylindrical section (82), and discharge ports (84) which are formed as a plurality of openings on a circumferential face of said cylindrical section (82) so as to discharge said intermediate chamber fluid in said cylindrical section (82) to an external portion of said cylindrical section (82) by rotation of said pumping ring (80).

2. The mechanical seal apparatus (10) as set forth in claim 1 further comprising
a supplying bore (71) configurated to supply said intermediate chamber fluid to said intermediate chamber (73), and
an outlet bore (72) configurated to discharge said intermediate chamber fluid from said intermediate chamber (73), wherein
said pumping ring (80) performs said pumping effect so that said intermediate chamber fluid which is supplied from said supplying bore (71) is discharged from said outlet bore (72) through said intermediate chamber (73).

3. The mechanical seal apparatus (10) as set forth in claim 1 or 2, wherein said intermediate chamber fluid is cooling fluid.

4. The mechanical seal apparatus (10) as set forth in any one of claims 1 to 3, wherein a groove (24) which is used for mounting a set plate (90) to equip said mechanical seal apparatus (10) as a cartridge type, the groove (24) is also used as an O-ring groove for mounting other components to said rotary shaft (2) after mounting said mechanical seal apparatus (10).

5. The mechanical seal apparatus (10) as set forth in claim 4, wherein said rotary ring (51) of said first mechanical seal (30) is provided to a side of the space where said object fluid is located, a back face of the rotary ring (31) is placed in consistent with a side face of said groove (24), which is close to said first mechanical seal (30).

## Patentansprüche

1. Gleitringdichtungsvorrichtung (10), die dafür ausgelegt ist, sich während des Gebrauchs zwischen einer Drehwelle (2) und einem Gehäuse (3) zu befinden, um ein Objektfluid abzudichten, und die Folgendes umfasst:
eine erste Gleitringdichtung (30), die an einer Position angeordnet ist, die näher an einem Raum liegt, wo sich das Objektfluid befindet,
eine zweite Gleitringdichtung (50), die an einer Position angeordnet ist, die von dem Raum entfernt liegt, und
eine Zwischenkammer (73), die zwischen der ersten Gleitringdichtung (30) und der zweiten Gleitringdichtung (50) ausgebildet ist,
wobei die Gleitringdichtungsvorrichtung (10) des Weiteren einen Pumpring (80) umfasst, um eine Pumpwirkung auszuüben, um ein Zwischenkammerfluid, das der Zwischenkammer (73) zugeführt wird, in der Zwischenkammer (73) fließen zu lassen, wobei die erste Gleitringdichtung (30) einen Drehring (31) umfasst, dessen Endfläche der Position zugewandt ist, die von dem Raum fort weist, und einen ortsfesten Ring (41) umfasst, der als eine Gleitfläche ausgebildet ist, wobei die zweite Gleitringdichtung (50) einen Drehring (51) umfasst, dessen Endfläche der Position zugewandt ist, die von dem Raum fort weist, und einen ortsfesten Ring (61) umfasst, der als eine Gleitfläche ausgebildet ist, **dadurch gekennzeichnet, dass** der Pumpring (80) so angeordnet ist, dass er sich während des Gebrauchs mit der Drehwelle (2) dreht, und eine Rückflächensektion (81) umfasst, die sich in einer radialen Richtung nahe der zweiten Gleitringdichtung (50) in der Zwischenkammer (73) erstreckt,
eine zylindrische Sektion (82), die aus einem Außenumfang der Rückflächensektion (81) zu einer Richtung der zweiten Gleitringdichtung (50) gebildet ist, um darin den Drehring (51) der zweiten Gleitringdichtung (50) aufzunehmen,
eine Saugmündung (83), die als eine Öffnung in der Rückflächensektion (81) ausgebildet ist, um das Zwischenkammerfluid in die zylindrische Sektion (82) einzuleiten, und
Auslassmündungen (84), die als mehrere Öffnungen in einer Umfangsfläche der zylindrischen Sektion (82) ausgebildet sind, um das Zwischenkammerfluid in der zylindrischen Sektion (82) zu einem externen Abschnitt der zylindrischen Sektion (82) durch Rotation des Pumprings (80) auszulassen.

2. Gleitringdichtungsvorrichtung (10) nach Anspruch 1, die des Weiteren umfasst:
eine Zufuhrbohrung (71), die dafür konfiguriert ist, das Zwischenkammerfluid zu der Zwischenkammer (73) zu leiten, und
eine Auslassbohrung (72), die dafür konfiguriert ist, das Zwischenkammerfluid aus der Zwischenkammer (73) auszulassen, wobei
der Pumpring (80) die Pumpwirkung so ausübt, dass das Zwischenkammerfluid, das von der Zufuhrbohrung (71) herangeführt wird, aus der Auslassbohrung (72) durch die Zwischenkammer (73) hindurch ausgelassen wird.

3. Gleitringdichtungsvorrichtung (10) nach Anspruch 1 oder 2, wobei das Zwischenkammerfluid ein Kühlfluid ist.

4. Gleitringdichtungsvorrichtung (10) nach einem der Ansprüche 1 bis 3, wobei eine Nut (24), die dafür verwendet wird, eine Stellplatte (90) zu montieren, um die Gleitringdichtungsvorrichtung (10) als einen Kartuschentyp bereitzustellen, die Nut (24) außerdem als eine O-Ring-Nut verwendet wird, um andere Komponenten an der Drehwelle (2) zu montieren, nachdem die Gleitringdichtungsvorrichtung (10) montiert wurde.

5. Gleitringdichtungsvorrichtung (10) nach Anspruch 4, wobei der Drehring (51) der ersten Gleitringdichtung (30) an einer Seite des Raumes angeordnet ist, wo sich das Objektfluid befindet, und eine Rückfläche des Drehrings (31) entsprechend einer Seitenfläche der Nut (24) angeordnet ist, die sich nahe der ersten Gleitringdichtung (30) befindet.

## Revendications

1. Dispositif formant joint mécanique (10) conçu de manière qu'en cours d'utilisation, il soit disposé entre un arbre tournant (2) et un logement (3) pour enfermer hermétiquement un fluide objet, comprenant :
un premier joint mécanique (30) disposé à une position plus proche d'un espace où se situe ledit fluide objet,
un second joint mécanique (50) disposé à une position distante dudit espace, et
une chambre intermédiaire (73) formée entre ledit premier joint mécanique (30) et ledit second joint mécanique (50),
dans lequel ledit dispositif mécanique (10) comprend en outre une bague de pompage (80) pour obtenir un effet de pompage, de manière à faire qu'un fluide de chambre intermédiaire fourni à ladite chambre intermédiaire (73) s'écoule dans la chambre intermédiaire (73),
ledit premier joint mécanique (30) comprend une bague rotative (31) dont la face d'extrémité en regard de ladite position distante dudit espace, et d'une bague fixe (41) est formée en tant que face de glissement, ledit second joint mécanique (50) comprend une bague rotative (51) dont la face d'extrémité en regard de ladite position distante dudit espace, et d'une bague fixe (61) est formée en tant que face de glissement,
**caractérisé en ce que** :
ladite bague de pompage (80) est conçue de manière à tourner, en cours d'utilisation, avec ledit arbre tournant (2) et comprend :
une section face arrière (81) s'étendant dans une direction radiale près dudit second joint mécanique (50) dans ladite chambre intermédiaire (73),
une section cylindrique (82) formée depuis une circonférence extérieure de ladite section face arrière (81) en direction dudit second joint mécanique (50) de manière à recevoir en son sein ladite bague rotative (51) dudit second joint mécanique (50),
un orifice d'aspiration (83) pratiqué sous la forme d'une ouverture sur ladite section face arrière (81), de manière à introduire ledit fluide de chambre intermédiaire dans ladite section cylindrique (82), et
des orifices de refoulement (84) qui sont pratiqués sous la forme d'une pluralité d'ouvertures sur une face circonférentielle de ladite section cylindrique (82), de manière à refouler ledit fluide de chambre intermédiaire dans ladite section cylindrique (82) vers une partie externe de ladite section cylindrique (82) par rotation de ladite bague de pompage (80).

2. Dispositif formant joint mécanique (10) selon la revendication 1, comprenant en outre :
un trou d'alimentation (71) conçu pour fournir ledit fluide de chambre intermédiaire à ladite chambre intermédiaire (73), et
un trou de sortie (72) conçu pour refouler ledit fluide de chambre intermédiaire depuis ladite chambre intermédiaire (73), dans lequel :
ladite bague de pompage (80) obtient ledit effet de pompage de manière que ledit fluide de chambre intermédiaire qui est fourni depuis ledit trou d'alimentation (71) soit refoulé depuis ledit trou de sortie (72) à travers ladite chambre intermédiaire (73).

3. Dispositif formant joint mécanique (10) selon la revendication 1 ou 2, dans lequel ledit fluide de chambre intermédiaire est un fluide de refroidissement.

4. Dispositif formant joint mécanique (10) selon l'une quelconque des revendications 1 à 3, dans lequel une rainure (24) qui est utilisée pour monter une plaque de réglage (90) afin d'installer ledit dispositif formant joint mécanique (10) comme un dispositif de type cartouche, la rainure (24) est également utilisée comme une rainure de joint torique pour monter d'autres composants sur ledit arbre tournant (2) après avoir monté ledit dispositif formant joint mécanique (10).

5. Dispositif formant joint mécanique (10) selon la revendication 4, dans lequel ladite bague rotative (51) dudit premier joint mécanique (30) est disposée d'un côté de l'espace où se situe ledit fluide objet, une face arrière de la bague rotative (31) est placée pour correspondre à une face latérale de ladite rainure (24) qui est proche dudit premier joint mécanique (30).
